# EUROPEAN PATENT APPLICATION

(11) **EP 3 306 741 A1**
(43) Date of publication of application: **11.04.2018**
(21) Application number: 16306315.9
(22) Date of filing: 06.10.2016
(51) Int. Cl.: H01Q 1/22, H01Q 1/24, H04B 1/3827, H01Q 1/38

(54) **RADIO FREQUENCY INTERCONNECTION DEVICE**

(71) Applicant: Thomson Licensing, 92130 Issy-les-Moulineaux (FR)
(72) Inventor: MINARD, Philippe, 35576 Cesson-Sévigné (FR); LO HINE TONG, Dominique, 35576 Cesson-Sévigné (FR); DEVAUD, Yoann, 35576 Cesson-Sévigné (FR); MORIN, Pierre-Marie, 35576 Cesson-Sévigné (FR)
(74) Representative: Huchet, Anne

(57) **Abstract**

An interconnection device for feeding an antenna is described. The interconnection device includes a flexible substrate, one or more ground elements disposed on at least one side of the flexible substrate and a transmission element disposed on at least one side of the flexible substrate. The at least one ground elements and the transmission element are operative when the flexible substrate is assembled to form the interconnection device.

## Description

### FIELD

The proposed apparatus is directed to an interconnection device for feeding an antenna for example an antenna coupled to a printed circuit board of a wireless communication device.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Home-networking devices are becoming more and more important thanks to the various services than can be offered, in particular through the numerous embedded wireless systems, for example, data and video wireless link service due to Wi-Fi systems, home-automation service using standards such as ZigBee, Zwave or 6LoWPAN, device remote control using for instance the Bluetooth or RF4CE protocol, and 3G/LTE based internet gateways. ZigBee is an IEEE 802.15.4-based specification for a suite of high-level communication protocols used to create personal area networks with small, low-power digital radios. Z-Wave is a wireless communications protocol for home automation. 6LoWPAN is an acronym for *IPv6 over Low power Wireless Personal Area Networks.* RF4CE is a ZigBee application profile.

All of these embedded wireless systems lead to the use of many antennas that have to be integrated inside the device casing with drastic constraints in terms of cost and performance (antenna efficiency, radiation pattern, isolation etc.) and more crucially in terms of space.

The most cost-effective conventional way to introduce an antenna is to print the antennas onto the circuit board of the home networking device. However, most of the board edges, where antennas may be placed to provide proper radiation, are already occupied: the front side is often occupied by numerous push-buttons and a display, the left side by a smart card holder and a hard disk drive (HDD) and, as usual, the rear side has many connectors (e.g., USB, HDMI, Ethernet, DC-in) and the RF (e.g., DTV, cable or satellite) tuner. These electronic components create obstacles to the radiation of radio waves and impair antenna performance. Therefore, only the right side is free for on-board antenna integration, which is far from sufficient.

That being the case, the next option is to use off-board antennas, meaning antennas printed on a standalone board, then attached to the device casing and interconnected to the circuit board by means of a miniature coaxial cable. However, because of its high cost this solution is only deployed if no other option is possible.

### SUMMARY

The proposed apparatus relates to an interconnection device for an antenna in a wireless system for example a home-networking electronic device, such as a set-top-box (STBs), gateway and smart home device. It will be appreciated that the proposed apparatus is not limited to any specific type of device and may be applied to any wireless communication device. The proposed apparatus in some embodiments is applied to an antenna provided on a smart-card of a home-networking device.

According to a first aspect of the invention there is provided an interconnection device for feeding an antenna. The interconnection device includes a flexible substrate, one or more ground elements disposed on at least one side of the flexible substrate and a transmission element disposed on at least one side of the flexible substrate. The at least one ground elements and the transmission element are operative when the flexible substrate is assembled to form the interconnection device.

In another embodiment the one or more ground elements and the transmission element are formed on the same side of the flexible substrate before the substrate is assembled to form the interconnection device.

In another embodiment the one or more ground elements and the transmission element are formed on different sides of the flexible substrate before the substrate is assembled to form the interconnection device.

In another embodiment the one or more ground elements and the transmission element are separated by a gap when the flexible substrate is assembled to form the interconnection device.

In another embodiment wherein the gap separating the one or more ground elements and the transmission element is an air gap.

In another embodiment the transmission element is an RF transmission element.

In another embodiment the flexible substrate may be formed of one or more materials, such as, plastic, paper, polyethylene terephthalate, and printed circuit board material.

In another embodiment the flexible substrate is coupled to a support, such as, paper coupled to molded plastic.

In another embodiment the flexible substrate has at least one groove formed therein to facilitate the assembly of such to form the interconnection device.

In another embodiment the flexible substrate has a nonplanar shape, such as, oval, polygonal and semi-circular.

In another embodiment an area comprising the one or more ground elements, surrounds an area comprising the transmission element when the flexible substrate is assembled to form the interconnection device.

In another embodiment an antenna is coupled to the interconnection device.

In another embodiment a set top box includes one or more antennas coupled to the interconnection device.

In another embodiment a device has therein one or more circuit boards on which one or more antennas are attached that are coupled to the interconnection device.

In another embodiment a device has a housing on which one or more antennas are attached that are coupled to the interconnection device.

### BRIEF DESCRIPTION OF THE DRAWINGS

The proposed apparatus is best understood from the following detailed description when read in conjunction with the accompanying drawings. The drawings include the following figures briefly described below:
**Fig. 1** depicts a typical circuit board architecture of a set top box, which is an example of a wireless communication device, in which embodiments of the invention may be implemented.
**Fig. 2** is an exemplary top view of an antenna coupled to a transmission device of the present disclosure.
**Figs. 3A-3B** are exemplary views of one embodiment of an assembled transmission device of the present disclosure.
**Figs. 4A-4B** are exemplary views of another embodiment of an assembled transmission device of the present disclosure.
**Figs. 5A-5B** are exemplary views of another embodiment of an assembled transmission device of the present disclosure.
**Figs. 6A-6B** are exemplary views of another embodiment of an assembled transmission device of the present disclosure.
**Figs. 7A-7B** are exemplary views of another embodiment of an assembled transmission device of the present disclosure.
**Figs. 8A-8B** are exemplary views of another embodiment of an assembled transmission device of the present disclosure.
**Figs. 9A-9B** are exemplary views of another embodiment of an assembled transmission device of the present disclosure.
**Figs. 10A-10B** are exemplary views of another embodiment of an assembled transmission device of the present disclosure.
**Figs. 11A-11D** are examples of exemplary shapes for a support of the assembled transmission device.
**Fig. 12** is a graph showing transmission loss and reflectance as a function of frequency for the embodiment shown in Fig 8B.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

A number of devices in accordance with embodiments of the invention will be described in what follows. One device relates to a set top box having one or more circuit boards on which one or more antennas are attached that are coupled to the interconnection device of the present invention.

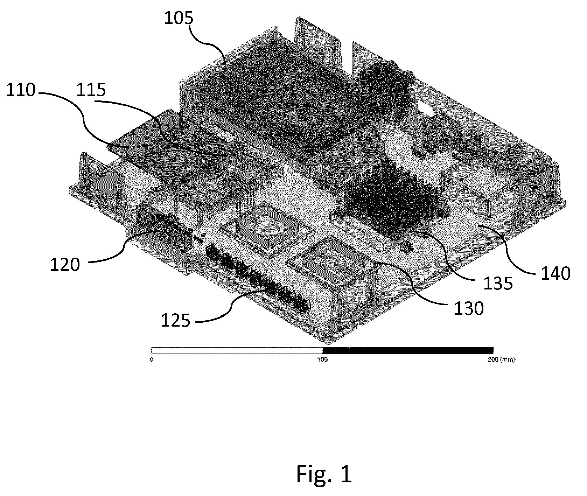

**Fig. 1** shows a portion of the electro-mechanical architecture of a set-top box, which is an example of a wireless communication device in which embodiments of the invention may be implemented. The exemplary set-top box includes a hard disk drive 105, a smart card 110, a smart card holder and interconnection pins 115 connecting the smart card holder to a main circuit board 140 (e.g., main printed circuit board). On the front of the set top box there is a display 120 and a plurality of push buttons 125 to control the set top box. There is at least one wireless chipset 130 and a system on a chip 135.

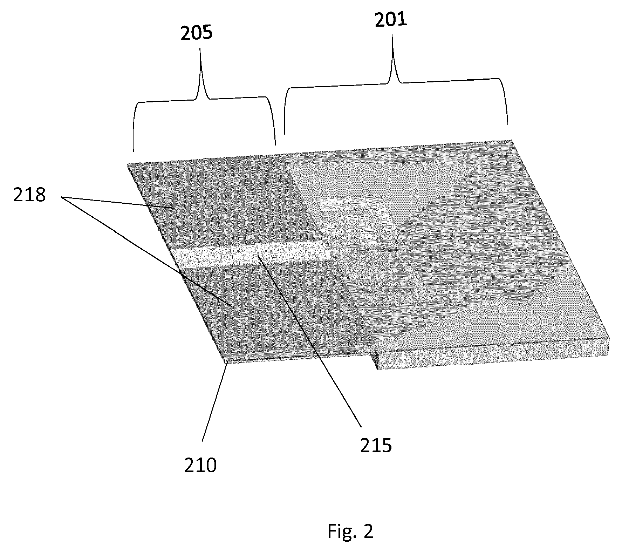

Embodiments of the proposed devices will now be described, by way of example, and with reference to the Figs. 2 - 10.

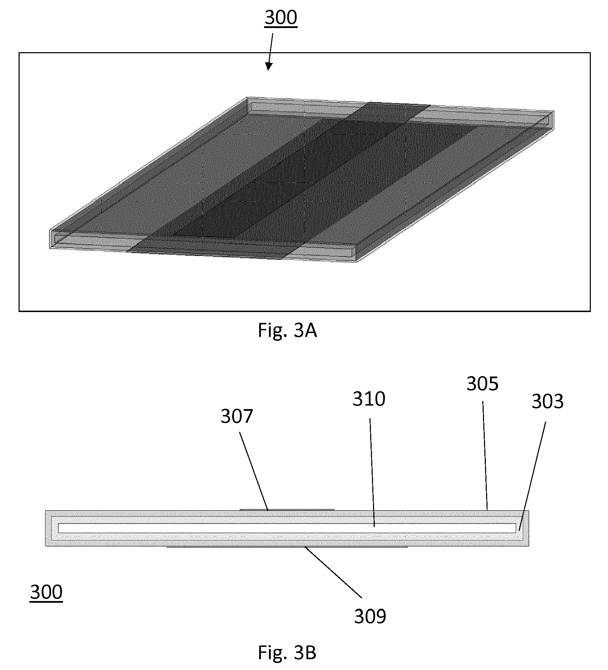

**Fig. 2** is an exemplary top view of an antenna 201 coupled to a transmission device 205 and which may be coupled to a printed circuit board of a wireless communication device, as shown in Fig. 1. The transmission portion of the structure 205 is disposed on a flexible substrate 210 and includes a transmission element 215 and one or more ground elements 218. The transmission device 205 may be assembled via folding or bending to generate exemplary operable transmission devices as shown in Figs. 3-10.

**Figs. 3A-3B** are exemplary views of one embodiment of an assembled transmission device 300. Fig. 3B is a side view of the assembled transmission device shown in Fig. 3A. In Fig. 3B, a flexible substrate 305 has disposed thereon a transmission element 307 and one or more ground elements 309. The transmission element 307 and one or more ground elements 309 are formed of one or more conductive layer(s) that may be realized using etching and/or printing technologies. The length and width of both the transmission element 307 and the one or more ground elements 309 are variable and a matter of design choice.

The flexible substrate 305 may be formed of one or more materials, such as, plastic, paper, polyethylene terephthalate, and printed circuit board material. The flexible substrate preferably has a dielectric constant (er) in the range of about 1.5 to 5, a thickness of about 0.05 to 0.5 mm and a dielectric loss/ tan δ of less than about 0.1. It should be understood that other values may also be used and are a matter of design choice.

The transmission element 307 and one or more ground elements 309 may be disposed on the flexible substrate 305 using for example aluminum etching on PET (polyethylene terephthalate) or metallic inkjet technology printing on plastic films or paper. The transmission element 307 and one or more ground elements 309 may be disposed on the same side or opposite sides of the flexible substrate 305.

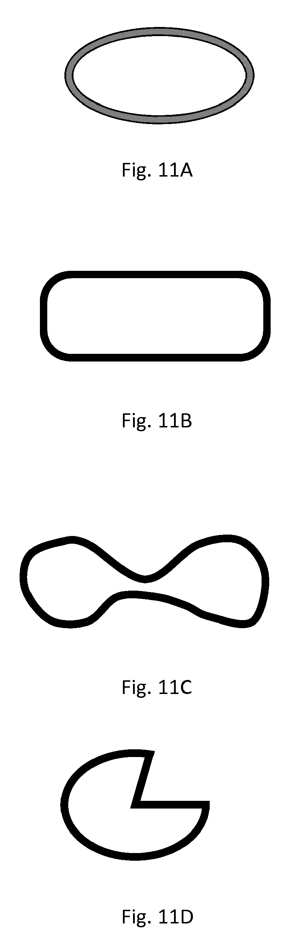

Additionally, the flexible substrate 305 may optionally be coupled to a support 303, formed of, for example, extruded plastic. In Fig. 3B, the support 303 has a rectangular shape. Other exemplary shapes for the support 303 are shown in **Figs. 11A-11D**. The support 303 may have an oval shape as shown in Fig. 11A, semi-circular as shown in Fig. 11D or polygonal shapes as shown in Figs. 11B-11C. Such exemplary shapes, as shown in Figs. 11A-11D, can provide a way to reinforce the flexible substrate or to improving the RF performance of the assembled transmission element where a specific distance between the transmission element 307 and the one or more ground elements 309 is needed to ensure a given impedance, or to match any mechanical constraints of the product in which the transmission element is to be integrated.

The support advantageously includes a gap 310. The gap is preferably an air gap. In Fig. 3B the flexible substrate 305 is supported on an outer surface of the support 303 by bending or folding in order to ease deformation thereof.

One advantage of the support 303 is that the transmission element is surrounded by the one or more ground elements thereby minimizing coupling to existing functionality of the main circuit board 140, proximate thereto. Additionally, the air gap 310 functions as a suspended line so as to minimize effective dielectric loss of the transmission element 307.

Connection of the transmission device 300 to the main circuit board 140 can be realized either directly or via electromagnetic coupling to, for example, RF lines thereon.

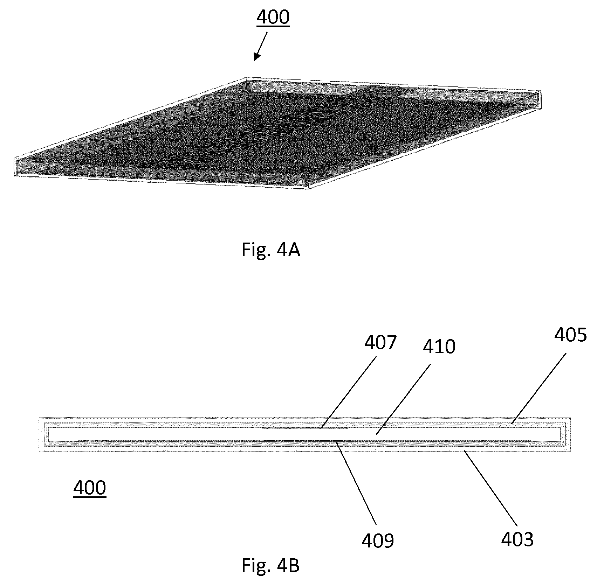

**Figs. 4A-4B** are exemplary views of another embodiment of an assembled transmission device 400. Fig. 4B is a side view of the assembled transmission device shown in Fig. 4A. In Fig. 4B, flexible substrate 405 is supported on an inner surface of rectangular support 403 by bending or folding in order to ease deformation thereof. Such an arrangement, advantageously provides for protection of the transmission element 407 and the one or more ground elements 409 from scratching or friction.

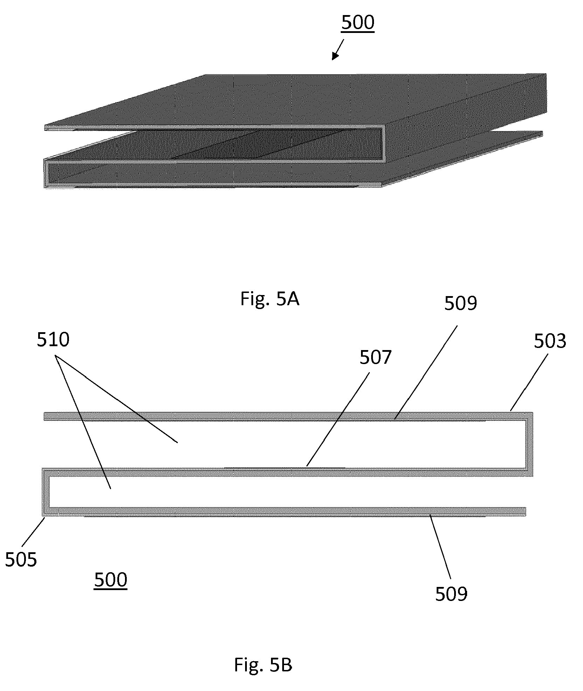

**Figs. 5A-5B** are exemplary views of another embodiment of an assembled transmission device 500. Fig. 5B is a side view of the assembled transmission device shown in Fig. 5A. In Fig. 5B, flexible substrate 505 is supported on the surface of an S-shaped support 503 by bending or folding thereof. As assembled, two ground elements 509 are positioned opposite the transmission element 507 with air gaps 510 there between. The flexible substrate 505 may include notches or grooves (not shown) to facilitate the bending or folding thereof.

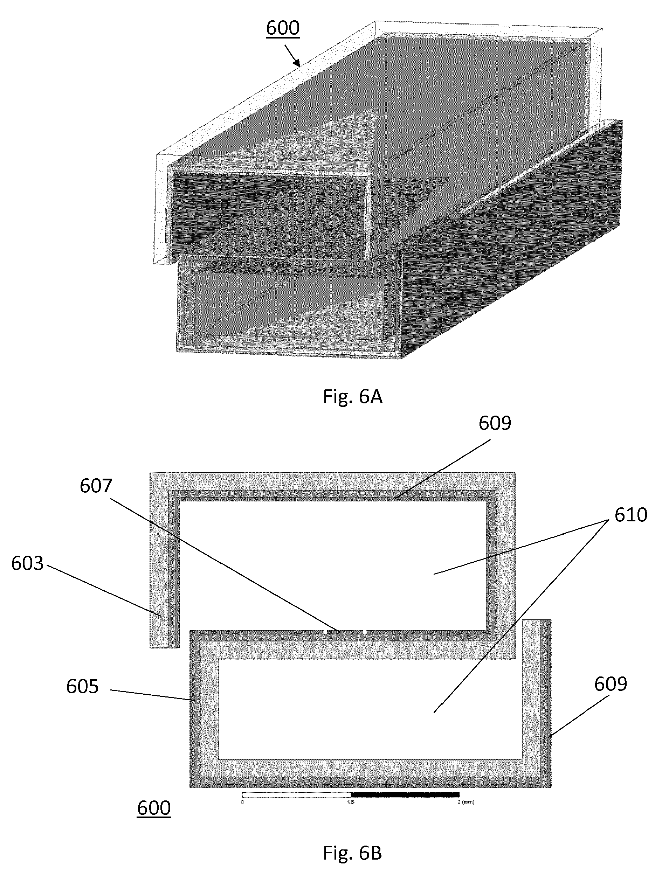

**Figs. 6A-6B** are exemplary views of another embodiment of an assembled transmission device 600. Fig. 6B is a side view of the assembled transmission device shown in Fig. 6A. In Fig. 6B, flexible substrate 605 is supported on the surface of a quasi S-shaped support 603 by bending or folding thereof. As assembled, two ground elements 609 are positioned surrounding the transmission element 607 with air gaps 610 there between. The flexible substrate 605 may include notches or grooves (not shown) to facilitate the bending or folding thereof.

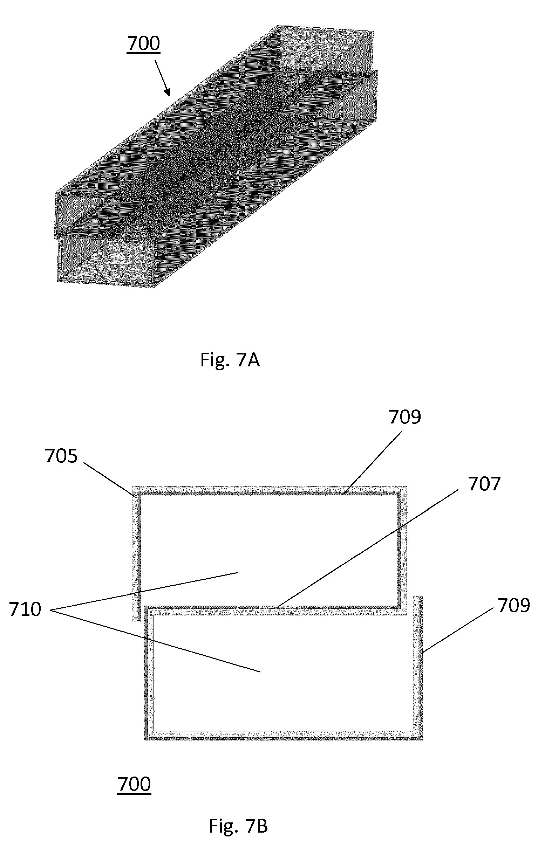

**Figs. 7A-7B** are exemplary views of another embodiment of an assembled transmission device 700. Fig. 7B is a side view of the assembled transmission device shown in Fig. 7A. In Fig. 7B, flexible substrate 705 is assembled into a quasi S-shaped structure by bending or folding thereof. As assembled, two ground elements 709 are positioned surrounding the transmission element 707 with air gaps 710 there between. The flexible substrate 705 may include notches or grooves (not shown) to facilitate the bending or folding thereof.

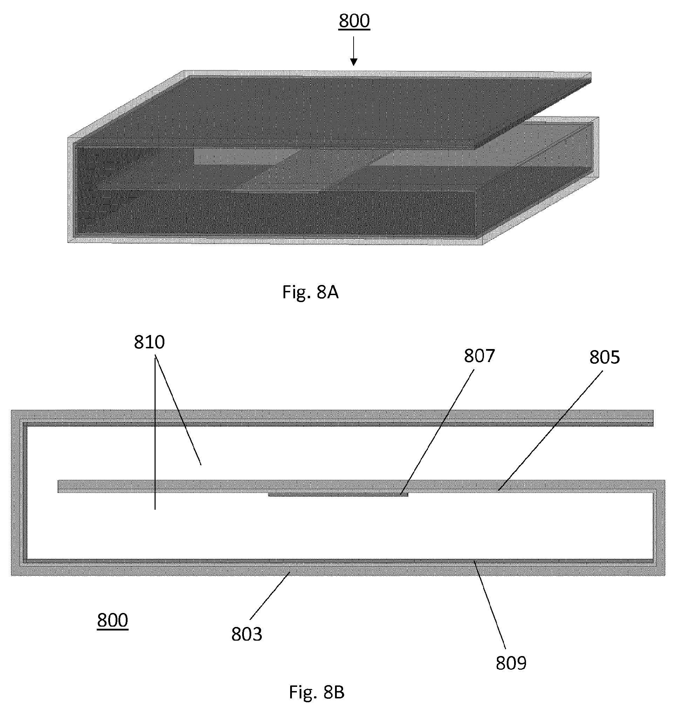

**Figs. 8A-8B** are exemplary views of another embodiment of an assembled transmission device 800. Fig. 8B is a side view of the assembled transmission device shown in Fig. 8A. In Fig. 8B, flexible substrate 805 is supported on the surface of a G-shaped support 803 by bending or folding thereof. As assembled, a ground element 809 is positioned surrounding the transmission element 807 with air gaps 810 there between. The flexible substrate 805 may include notches or grooves (not shown) to facilitate the bending or folding thereof.

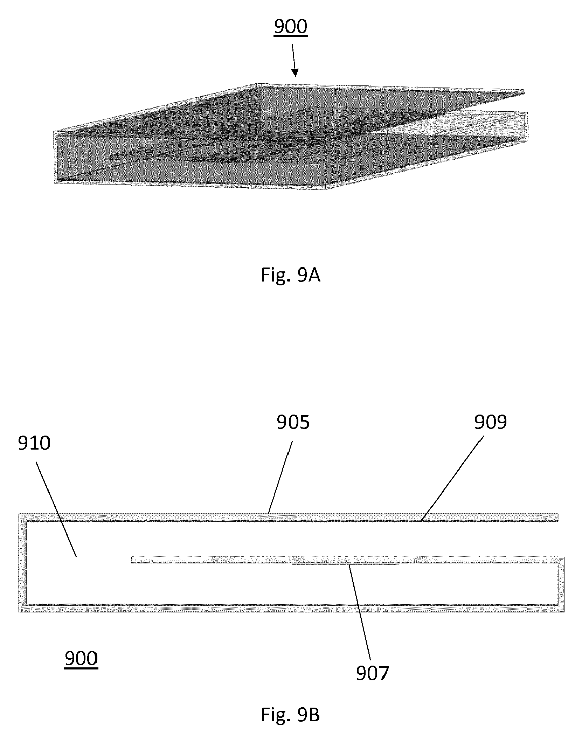

**Figs. 9A-9B** are exemplary views of another embodiment of an assembled transmission device 900. Fig. 9B is a side view of the assembled transmission device shown in Fig. 9A. In Fig. 9B, flexible substrate 905 is assembled into a G-shaped structure by bending or folding thereof. As assembled, a ground element 909 are positioned surrounding the transmission element 907 with air gap 910 there between. The flexible substrate 905 may include notches or grooves (not shown) to facilitate the bending or folding thereof.

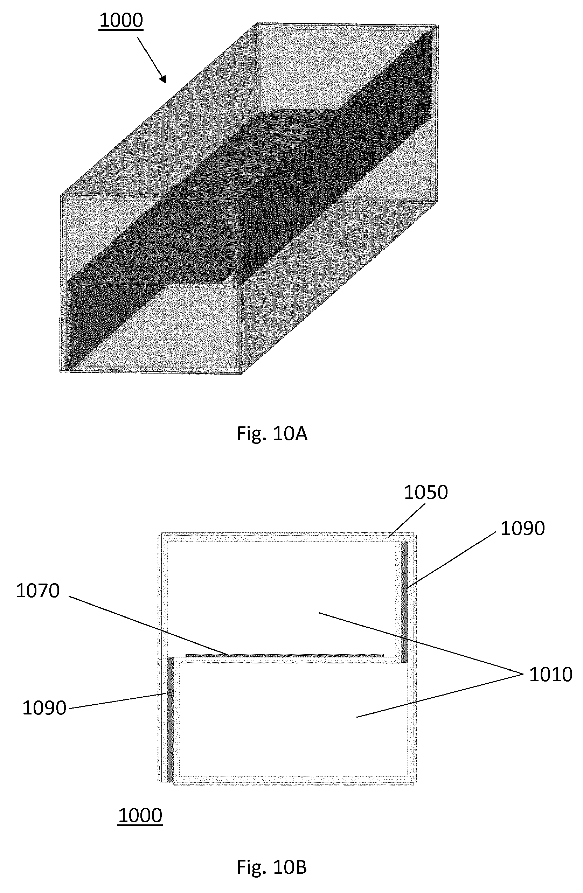

**Figs. 10A-10B** are exemplary views of another embodiment of an assembled transmission device 1000. Fig. 10B is a side view of the assembled transmission device shown in Fig. 10A. In Fig. 10B, flexible substrate 1050 is assembled into a square structure by bending or folding thereof. As assembled, two ground elements 1090 are positioned on inner portions of the square structure on either side of the transmission element 1070 positioned between air gaps 1010. The flexible substrate 1050 may include notches or grooves (not shown) to facilitate the bending or folding thereof.

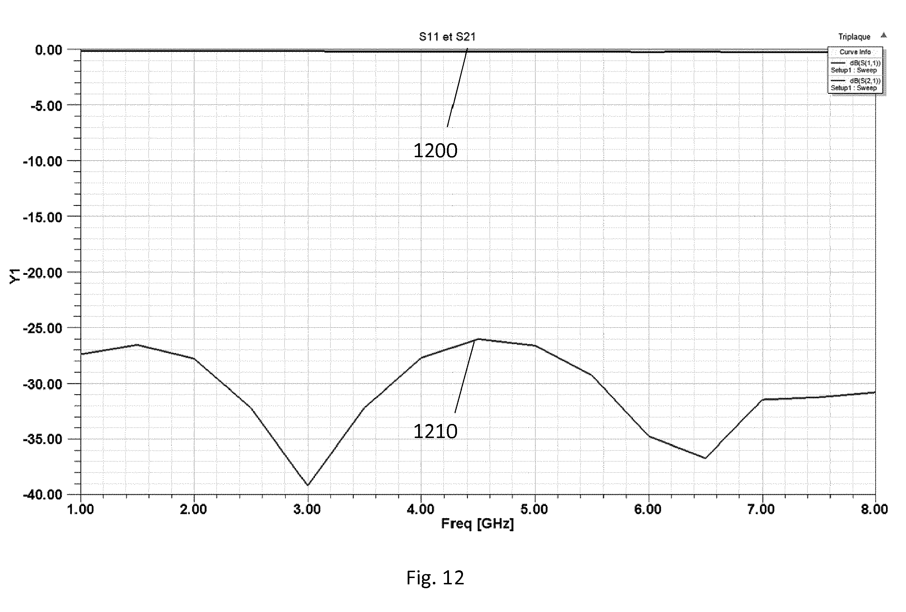

**Fig. 12** shows the transmission loss (line 1200) as a function of frequency for the exemplary embodiment shown in Fig. 8B. For this G-shaped structure, the flexible substrate is formed of paper with a transmission element width is 4 mm and a length of 5 cm. The ground element width is 18.3 mm, length is 5 cm and height is 4 mm. The tangential distance between the transmission element and the ground element is 2 mm. The return loss (line 1210) of the exemplary transmission device shows a good impedance matching level in two Wi-Fi bands, with a return loss lower than -30dB in the 3 GHz band and lower than -35dB in the 6.5 GHz band.

It is to be understood that the proposed apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

## Claims

1. An interconnection device (400), comprising:
a substrate (405);
one or more ground elements (409) disposed on at least one side of the substrate (409); and
a transmission element (407) disposed on at least one side of the substrate (405), wherein the at least one ground elements (409) and the transmission element (407) are operative when the substrate is assembled to form the interconnection device (400).

2. The interconnection device of claim 1, wherein the one or more ground elements and the transmission element are formed on the same side of the substrate before said substrate is assembled to form the interconnection device.

3. The interconnection device of claim 1, wherein the one or more ground elements and the transmission element are formed on different sides of the substrate before said substrate is assembled to form the interconnection device.

4. The interconnection device of any of the preceding claims, wherein the one or more ground elements and the transmission element are separated by a gap (410) when the substrate is assembled to form the interconnection device.

5. The interconnection device of claim 4, wherein the gap is an air gap.

6. The interconnection device of any of the preceding claims, wherein the transmission element is an RF transmission element.

7. The interconnection device of any of the preceding claims, wherein the substrate is formed of one or more materials selected from the group consisting of plastic, paper, polyethylene terephthalate, and printed circuit board material.

8. The interconnection device of claim 7 wherein the substrate (405) is coupled to a support (403).

9. The interconnection device of any of the preceding claims wherein the substrate has at least one groove formed therein.

10. The interconnection device of any of the preceding claims wherein the substrate has a nonplanar shape.

11. The interconnection device of any of the preceding claims, wherein an area comprising the one or more ground elements surrounds an area comprising the transmission element when the substrate is assembled to form the interconnection device.

12. An antenna coupled to the interconnection device according to any of the preceding claims.

13. A set top box comprising one or more antennas according to claim 12.

14. A device, comprising:
one or more circuit boards, wherein one or more antennas according to claim 12 are coupled to the one or more circuit boards.

15. A device, comprising:
a housing, wherein one or more antennas according to claim 12 are coupled to the housing.
